# EUROPEAN PATENT SPECIFICATION

(11) **EP 0 566 026 B1**
(45) Date of publication and mention of the grant of the patent: **29.11.1995**
(21) Application number: 93105805.1
(22) Date of filing: 08.04.1993
(51) Int. Cl.: B60K 15/04

(54) **A safety device for the filler pipes of motor-vehicle fuel tanks**
Sicherheitsvorrichtung eines Einfüllstutzens für Fahrzeugkraftstoffbehälter
Dispositif de sécurité pour tuyau de remplissage d'un réservoir de carburant pour véhicules

(30) Priority: 14.04.1992 IT TO920107 U
(43) Date of publication of application: 20.10.1993
(73) Proprietor: FIAT AUTO S.p.A., 10135 Torino (IT)
(72) Inventor: Difino, Arturo, I-10141 Torino (IT); Massenz, Andrea, I-10135 Torino (IT)
(74) Representative: Marchitelli, Mauro

(56) References cited:
- BE-A- 452 342
- CA-A- 1 138 376
- DE-B- 1 096 787
- US-A- 4 537 437
- US-A- 4 744 482

## Description

The present invention relates to filler pipes for motor-vehicle fuel tanks, having tubular bodies for the insertion of a gun-like delivery nozzle and means for retaining a closure cap.

When filling up, the cap (which normally has screw or bayonet engagement means) is removed so that the pipe of the nozzle can be inserted in the filler pipe. With automatic nozzles, that is, nozzle which do not require the manual operation of a trigger to open the flow valve, the person operating the nozzle often lets go of it until the tank is completely full or until a preset quantity of fuel has been admitted. In this case, since the nozzle is held in the filling position simply by gravity, there is a risk that its pipe may accidentally come out of the filler pipe and spill fuel outside the tank, with the dangers which may ensue.

For this reasons, it has been proposed to provide the pipes of nozzles with external abutments, for example, in the form of annular collars, for cooperating with catch members in the filler pipes to prevent the nozzles from coming out accidentally during filling-up. The catch member in the filler pipe has to be provided by the manufacturer and, in fact, the standards relating to the subject are directed in this sense. In order to comply with such standards in existing vehicles, however, it would be necessary to modify or even to replace the filler pipe after removing the tank from the vehicle. These operations would involve considerable difficulties and take a long time to carry out, with resulting expense.

The object of the present invention is to prevent this problem and to provide a safety device which can conveniently and easily be fitted to existing filler pipes without modification, in order to prevent the nozzle from coming out accidentally during filling-up.

The safety device according to the invention is characterised in that it includes a body which has a lateral skirt for fitting on the filler pipe in place of the cap by means of the retaining means on the filler pipe, and an end wall having a hole for the insertion of the nozzle, the edge of the hole which is intended to be lowermost in the fitted condition defining a catch for cooperating with the abutment member on the nozzle to prevent it from accidentally coming out of the filler pipe.

The invention will now be described in detail with reference to the appended drawings, provided purely by way of non-limiting example, in which:
Figure 1 is a perspective view of a first embodiment of the safety device according to the invention,
Figure 2 is a schematic sectional view of the device of Figure 1 in the condition of use,
Figure 3 is a perspective view of a variant of the safety device, and
Figure 4 is a schematic sectional view showing the device of Figure 3 in use.

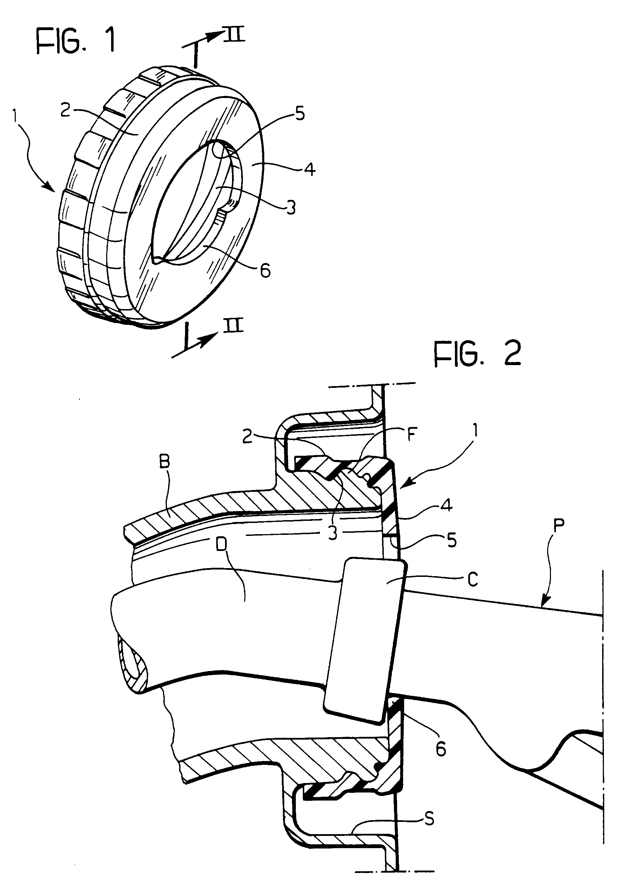

In Figure 2, the filler pipe, indicated B, of a motor-vehicle fuel tank has an end portion which projects through a seat in a bodywork S of the vehicle and carries an external thread F. A closure cap, not shown, is screwed onto the thread F in conventional manner and is removable to enable the fuel to be replenished by means of a gun-like delivery nozzle P.

With reference now to Figure 1, a safety device according to the invention, indicated 1, is constituted by a monolithic body, normally of moulded plastics material, having an overall shape substantially corresponding to that of the cap normally associated with the filler pipe B. The body 1 has a lateral skirt 2 with an internal thread 3 corresponding to the external thread F on the filler pipe B and an end wall 4 with a hole 5. A region of the edge of the hole 5 defines a catch 6 for cooperating with an abutment member on the nozzle P. The abutment member is constituted, for example, by an outer annular collar C on the base of the pipe D of the nozzle P.

In use, when filling up, the cap is removed from the filler pipe B and replaced by the body 1, the internal thread 3 on the skirt 2 being screwed onto the external thread F on the filler pipe B in the manner shown in Figure 2. The shape of the thread 3 is such that, when the body 1 has been screwed home, the catch 6 is in the lowermost position. The pipe D of the nozzle P is then inserted in the filler pipe B through the hole 5 in the body 1, with care being taken to position the abutment collar C beyond the end wall 4. At this point, if one lets go of the nozzle P, it will be disposed by gravity in the manner shown in Figure 1, with its abutment collar C in front of the catch 6. This prevents the pipe D from accidentally coming out of the filler pipe B; in fact, the nozzle P can be removed only by the deliberate lifting of the collar C to release it from the hole 5.

Preferably the lateral skirt 2 is externally shaped so as to comprise coupling means (not illustrated in the drawings), for example a thread or bayonet engagement elements, in order to make it possible to associate an external cap, internally provided with correspondingly shaped coupling means to the body 1. In such a case it is possible to leave the body 1 permanently associated with the filler pipe B and, when filling up, it is only necessary to remove the external cap, in order to make the access to the opening 5 free, as if it were a conventional cap.

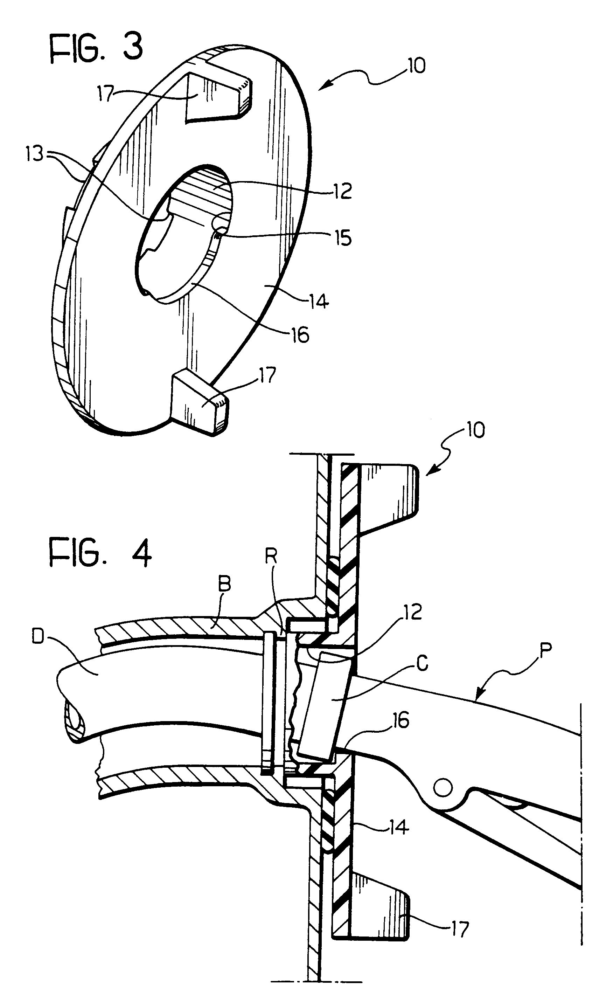

Figures 3 and 4 show a variant of the safety device according to the invention for application to filler pipes B with internal bayonet elements R instead of the external thread F for engaging the closure cap.

This variant of the device, indicated 10, is also constituted by a generally circular body of moulded plastics material or light alloy, having a lateral skirt 12 with bayonet engagement elements 13 complementary to the elements R of the filler pipe B and an end wall 14 which has a diameter considerably larger than that of the skirt 12 and carries two opposed axial operating appendages 17. The region connecting the skirt 12 and the end wall 14 defines a hole 15. the edge of which has a catch 16 similar to the catch 6 of the embodiment described above.

In use, when filling up, the body 10 is engaged in the filler pipe B in place of its cap by the engagement of the bayonet elements 13 and R in the manner shown in Figure 4. In this embodiment the arrangement of the bayonet connection is also such that, when the body 10 is fitted, the catch 16 is in the lowermost position in order to cooperate with the abutment collar C of the nozzle P in the manner described above.

To advantage, the width of the end wall 14 is such that it covers the region of the bodywork of the vehicle surrounding the filler pipe B, thus preventing the risk of damage when the pipe D of the nozzle P is inserted.

## Claims

1. A safety device for the filler pipes (B) of motor-vehicle fuel tanks including tubular bodies (B) for the insertion of a gun-like delivery nozzle (P) and means (F, R) for retaining a closure cap, characterised in that it includes a body (1, 10) which has a lateral skirt (2, 12) for fitting on the filler pipe (B) in place of the cap by means of the retaining means (F, R), and an end wall (4, 14) having a hole (5, 15) for the insertion of the nozzle (P), the edge of the hole which is intended to be lower-most in the fitted condition defining a catch (6, 16) for cooperating with an abutment (C) on the nozzle (P) to prevent it from accidentally coming out of the filler pipe (B).

2. A safety device according to claim 1, characterised in that the body (1, 10) comprises external coupling means adapted to be engaged by corresponding internal coupling means formed in a cap.

3. A safety device substantially as described and illustrated and for the purposes specified.

## Patentansprüche

1. Sicherheitsvorrichtung für Einfüllstutzen (B) Von Kraftstoffbehältern für Kraftfahrzeuge, die rohrförmige Körper (B) zum Einsetzen eines rohrartigen Zapfhahns (P) sowie eine Einrichtung (F, R) aufweist, um eine Verschlußkappe festzuhalten, dadurch gekennzeichnet, daß die Vorrichtung einen Körper (1, 10) mit einem seitlichen Rand (2, 12), um ihn am Einfüllstutzen (B) an Stelle der Kappe mit Hilfe der Halteeinrichtung (F, R) zu befestigen, sowie eine Stirnwand (4, 14) aufweist, die eine Öffnung (5, 15) für das Einsetzen des Hahns (P) besitzt, wobei jener Rand der Öffnung, der im eingesetzten Zustand ganz unten liegt, eine Eingreifeinrichtung (6, 16) bildet, um mit einem Auflager (C) am Hahn (P) zusammenzuwirken, um zu verhindern, daß dieser unabsichtlich aus dem Einfüllstutzen (B) gelangt.

2. Sicherheitsvorrichtung gemäß Anspruch 1, dadurch gekennzeichnet, daß der Körper (1, 10) eine äußere Kupplungseinrichtung enthält, die so aufgebaut ist, um in eine entsprechende innere Kupplungseinrichtung einzugreifen, die in einer Kappe ausgebildet ist.

3. Sicherheitsvorrichtung, wie sie im wesentlichen beschrieben und dargestellt wurde, sowie für den bezeichneten Zweck.

## Revendications

1. Dispositif de sécurité pour goulotte de remplissage (B) de réservoirs de carburant de véhicules automobiles comprenant des corps tubulaires (B) pour l'insertion d'une lance de distribution (P) du type pistolet et des moyens (F, R) destinés à retenir un bouchon de fermeture, caractérisé en ce qu'il comprend un corps (1, 10) gui possède une jupe latérale (2, 12) destinée à se monter sur la goulotte de remplissage (B) à la place du bouchon à l'aide des moyens de retenue (F, R), et une paroi d'extrémité (4, 14) ayant un trou (5, 15) pour l'insertion de la lance (P), le bord du trou qui est destiné à être le plus bas dans l'état monté définissant un arrêt (6, 16) destiné à coopérer avec une butée (C) prévue sur la lance (P) pour l'empêcher de se dégager accidentellement de la goulotte de remplissage (B).

2. Dispositif de sécurité selon la revendication 1, caractérisé en ce que le corps (1, 10) comprend des moyens d'accouplement extérieurs adaptés pour être attaqués par des moyens d'accouplement intérieurs correspondants formés dans un bouchon.

3. Dispositif de sécurité sensiblement comme décrit et représenté, et destiné aux applications spécifiées.
